# EUROPEAN PATENT SPECIFICATION

(11) **EP 3 448 912 B1**
(45) Date of publication and mention of the grant of the patent: **04.03.2026**
(21) Application number: 17720772.7
(22) Date of filing: 28.04.2017
(51) Int. Cl.: C08G 65/40, C08J 5/00, C08K 3/00, C08K 5/00, C09K 21/14, C08G 65/48, C08G 73/00, C08K 7/00, C08K 13/00, C08L 65/00, C08L 71/00, C08L 71/12, C08L 79/08, C08L 81/02, C08L 81/06

(54) **HIGH-FLOW POLYPHENYLSULFONE COMPOSITIONS**
HIGH-FLOW-POLYPHENYLSULFON-ZUSAMMENSETZUNGEN
COMPOSITIONS DE HIGH-FLOW-POLYPHÉNYLSULFONE

(30) Priority: 29.04.2016 US 201662329482 P; 08.09.2016 EP 16187796; 09.02.2017 US 201762456955 P
(43) Date of publication of application: 06.03.2019
(73) Proprietor: Syensqo Specialty Polymers USA, LLC, Alpharetta GA 30005-3914 (US)
(72) Inventor: EL-HIBRI, Mohammad Jamal, Atlanta Georgia 30350 (US)
(74) Representative: Benvenuti, Federica
(86) International application number: PCT/EP2017/060217
(87) International publication number: WO 2017/186922

(56) References cited:
- WO-A1-2008/003659
- WO-A1-2009/077553
- WO-A1-2015/124903
- WO-A1-2016/016643
- WO-A1-2016/092087
- WO-A1-2016/097752
- WO-A1-2016/097752

## Description

### FIELD OF THE INVENTION

The present invention relates to high-flow polymer compositions including a polyphenylsulfone (PPSU) and a PEEK-PEDEK copolymer.

### BACKGROUND

PPSU is a high performance poly(aryl ether sulfone) polymer delivering better impact and chemical resistance than, for example, polysulfone (PSU) or polyetherimide (PEI). PPSU possesses outstanding mechanical toughness and chemical resistance properties for many engineering applications; however, these benefits are not always possible to take advantage of because of its relatively high melt viscosity. This is especially the case in applications requiring very thin parts or layers, such as mobile electronics or wire coating. Another example is fused filament fabrication additive manufacturing, in which low melt viscosities are needed to allow polymer deposition without the need to use extremely high melt temperatures as the viscosity required for polymer deposition can be achieved at lower temperatures with the use of lower melt viscosity materials. High temperatures may degrade the polymer over time and generate charred material, which can plug the deposition nozzle of the additive manufacturing device or be introduced into the part being manufactured.

WO 2016/097752A1 discloses compositions comprising (i) a polymeric material (A) having a repeat unit of formula -(O-Ph)n-O-Ph-O-Ph-CO-Ph- and a repeat unit of formula -O-Ph-Ph-O-Ph-CO-Ph- , wherein Ph represents a phenylene moiety and n represents 0 or 1; and (ii) a polymeric additive, wherein said polymeric additive is selected from the group comprising a polycarbonate; and a polymeric material (B) which includes a repeat unit of general formula -CR¹R²-CR³R⁴-, wherein R¹ and R² independently represent a hydrogen atom or an optionally-substituted alkyl group, and R³ and R⁴ independently represent a hydrogen atom or an optionally-substituted alkyl group, an anhydride-containing moiety or an alkyloxycarbonyl-containing moiety. Comparative Example 7 discloses a composition comprising 70 wt% of polymeric material (A) (i.e. PEEK-PEDEK copolymer) and 30 wt% of PPSU (as polymeric additive).

WO 2016/016643A1 discloses a blend comprising: (i) a polymeric material (A) having a repeat unit of formula -O-Ph-O-Ph-CO-Ph- and a repeat unit of formula -O-Ph-Ph-O-Ph-CO-Ph-, wherein Ph represents a phenylene moiety; and (ii) a polymeric material (B) having a repeat unit of formula (XX): 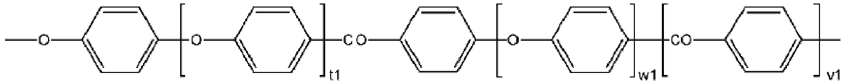 wherein t1 and w1 independently represent 0 or 1 and v1 represents 0, 1 or 2. Comparative Example 18 discloses a composition comprising 70 wt% of polymeric material (A) (i.e. PEEK-PEDEK copolymer) and 30 wt% of PPSU as polymeric material (B).

WO 2015/124903A1 discloses a process for manufacturing an object by laser sintering comprises: (i) selecting a powder comprising a polymeric material having a repeat unit of formula -O-Ph-O-Ph-CO-Ph-, and a repeat unit of formula -O-Ph-Ph-O-Ph-CO-Ph-, wherein Ph represents a phenylene moiety; and (ii) selectively sintering the powder to produce the object. The preparation of PEEK-PEDEK copolymer is described in Example 1.

WO2016/092087A1 discloses adhesive compositions that significantly improve the adhesion of polymer overmold compositions to metal substrates in polymer-metal junctions. The overmold composition includes at least one poly(aryl ether ketone) polymer. PEEK-PEDEK is used in the examples to show improved adhesion on aluminum, stainless steel, and copper.

WO 2009/077553A1 relates to specific copolymers which are polyphenyl sulfone ketone (PPSK) copolymers. In the example section, those specific PPSK copolymers are shown to unexpectedly feature improved properties when compared to PPSU-PEEK blends.

WO 2008/003659A1 discloses polymer compositions comprising at least one poly(aryl ether ketone), at least one poly(biphenyl ether sulfone) and at least one fibrous carbon nanofiller. The examples section describes blends composed of PEEK homopolymer and PPSU.

Accordingly, a need exists for high-flow PPSU compositions that do not compromise PPSU's desirable properties.

### DETAILED DESCRIPTION OF PREFERRED EMBODIMENTS

Described herein are polymer compositions comprising a polyphenylsulfone (PPSU) and a PEEK-PEDEK copolymer (as described below), methods of making the polymer composition, and shaped articles including the polymer composition.

Applicants surprisingly discovered that blending PEEK-PEDEK copolymer with PPSU produces a polymer composition exhibiting improved flowability and impact resistance without reduction in chemical resistance.

Traditionally, increasing PPSU flowability has meant a tradeoff in impact and chemical resistance. For example, attempts have been made to improve PPSU flow by adding an aromatic high-flowing polymer like polyetheretherketone (PEEK), PSU, or a melt processable perfluoropolymer such as MFA, the copolymer from the copolymerization of tetrafluoroethylene and vinylmethylether. The addition of PEEK invariably causes a loss in PPSU's toughness. The addition of PSU also compromises the toughness of the PPSU, and the improvement in flow is usually not very substantial. The addition of MFA, while producing substantial improvement in melt flowability, results in reduced toughness and aesthetic defects in parts molded from the composition because of the gross thermodynamic incompatibility between melt processable fluoropolymers, such as MFA, and PPSU.

Applicants found that PEEK-PEDEK copolymers increase PPSU flowability while overcoming all of the above limitations. Unlike the other flow enhancement approaches described above, the present approach does not compromise, and in fact improves, the toughness of the present polymer compositions. Moreover, despite the relatively weak chemical resistance of PEEK-PEDEK copolymer, Applicants surprisingly found that addition of the PEEK-PEDEK copolymer to the PPSU does not compromise the chemical resistance of the PPSU, despite the addition of significant amounts of PEEK-PEDEK copolymer.

Thus, the polymer composition may exhibit the advantageous chemical and mechanical properties described below.

Flowability of the polymer composition can be determined by measuring the melt flow rate (MFR) and melt viscosity.

In some embodiments, the polymer composition has an MFR ranging from about 25 to about 70 g/10 min, preferably from about 35 to about 60 g/10 min, more preferably from about 40 to about 50 g/10 min as measured at 365°C with a 5.0 kg weight according to ASTM D1238. In alternative embodiments, the polymer composition has an MFR ranging from about 25 to about 45 g/10 min, preferably from about 27 to about 41 g/10 min. In some aspects, the melt flow rate of the polymer composition is about 30 %, preferably about 60 % greater than the melt flow rate of the PPSU alone (i.e. PPSU without the other components in the polymer composition), where the melt flow rate is measured at 365°C with a 5.0 kg weight according to ASTM D1238.

Moreover, the polymer composition may have a melt viscosity preferably ranging from about 200 to about 550 Pa·s, about 250 to about 500 Pa·s, about 300 to about 450 Pa·s, about 350 to about 550 Pa·s, about 365 to about 500 Pa·s as measured according to ASTM D3835 with a temperature of 380°C, a shear rate of 500 s⁻¹, and a die having an orifice length of 15.240 ± 0.025 mm and an orifice diameter of 1.016 ± 0.008 mm. In some aspects, the melt viscosity of the polymer composition is about 12 %, preferably about 25 % less than the melt viscosity of the PPSU alone.

Izod impact resistance is a common way to measure toughness of a polymer. The polymer composition may have a notched Izod impact resistance preferably ranging from about 11 to about 21 ft-lb/in, about 12 to about 20 ft-lb/in, about 13 to about 19 ft-lb/in, about 14 to about 18 ft-lb/in as measured according to ASTM D256.

Chemical resistance of a plastic to polar organic chemicals can be measured by its resistance to sunscreen lotion, which generally represents one of the harshest consumer chemicals. In particular, sunscreen lotion generally contains a spectrum of ultraviolet absorbing chemicals that can be highly corrosive to plastic. A representative sunscreen can include at least 1.8 wt. % avobenzone (1 (4-methoxyphenyl)-3-(4-tert-butylphenyl)-1,3-propanedione), at least 7 wt. % homosalate (3,3,5-trimethylcyclohexyl salicylate) and at least 5 wt. % octocrylene (2-ethylhexyl 2-cyano-3,3-diphenylacrylate). An example of the aforementioned sunscreen is commercially available under the trade name Banana Boat^{®} Sport Performance^{®} (SPF 30) from Edgewell (St. Louis, MO). The chemical resistance of polymer composition can be measured using environmental stress cracking resistance (ESCR) testing. ESCR is assessed by measuring the lowest strain necessary to visually observe cracking or crazing in a molded sample of the polymer composition after the sample is exposed to aggressive chemicals and aged in a controlled environment ("critical strain"). In general, the higher the critical strain, the higher the chemical resistance of the polymer composition. In some embodiments, the polymer composition of interest has an ESCR critical strain to sunscreen of > 2.0 %. The measurement of critical strain is described further in the Examples below.

In some embodiments, the polymer composition has an "environmental stress cracking resistance (ESCR) critical strain to sunscreen" of > 2.0 % when evaluated according to the procedure described in the Examples.

The above properties make the flow-enhanced PPSU formulations suitable for use in applications that require a combination of toughness and chemical resistance along with very low melt viscosity. Examples of such applications include injection molding of thin walled articles (e.g., articles having a portion with a thickness less than 2.0 mm, preferably less than 1.5 mm and an overall average flow length to thickness ratio of greater than 50, preferably greater than 100, and more preferably greater than 150), fiber spinning, melt extrusion of thin shaped articles (e.g., less than 0.05 mm, preferably less than 0.025 mm), insulative or protective coatings for wires, and additive manufacturing of shaped articles by fused filament deposition.

### Polyphenylsulfone (PPSU)

As used herein, "polyphenylsulfone (PPSU)" denotes any polymer of which at least 50 mol % of the recurring units are recurring units (R_{PPSU}) of formula (I) : 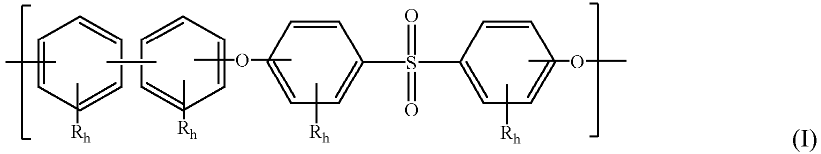 where :
each R, equal to or different from each other, is selected from a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium; and
each h, equal to or different from each other, is an integer ranging from 0 to 4.

Preferably, at least 60 mol %, 70 mol %, 80 mol %, 90 mol %, 95 mol %, and most preferably at least 99 mol %, of recurring units in the PPSU are recurring units (R_{PPSU}).

In some embodiments, the recurring units (R_{PPSU}) are represented by following formula (Ia) : 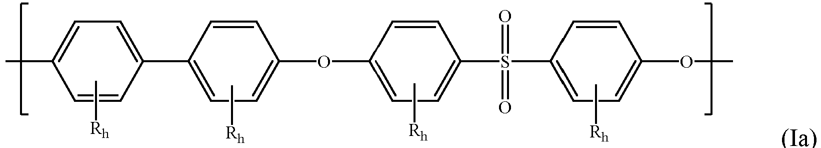 where R and h are as described above. In some such embodiments, each h is zero.

PPSU is available as RADEL^{®} PPSU from Solvay Specialty Polymers USA, L.L.C.

The melt flow rate (MFR) of the PPSU ranges from 5 g/10 min to 60 g/10 min, preferably from 10 g/10 min to 40 g/10 min, and most preferably from 14 to 28 g/10 min as measured according to ASTM D1238 at 365°C with a 5.0 kg weight.

The weight average molecular weight (Mw) of the PPSU preferably ranges from 20,000 to 80,000 Daltons, preferably from 30,000 to 70,000 Daltons, and most preferably from 40,000 to 60,000 Daltons, as measured by gel permeation chromatography using either methylene chloride or N-methyl pyrrolidinone (NMP) as solvent and polystyrene molecular weight calibration standards.

In some embodiments, the polymer composition includes the PPSU in an amount ranging from about 60 to about 99 wt. %, preferably from about 60 to about 75 wt. %, based on the combined weight of the PEEK-PEDEK copolymer and the PPSU.

### PEEK-PEDEK Copolymer

As used herein, a "PEEK-PEDEK copolymer" denotes a copolymer comprising :
- recurring units (R_{PEEK}) of formula (II) : 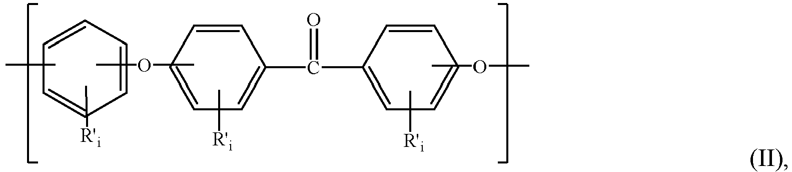 and
- recurring units (R_{PEDEK}) of formula (III) : 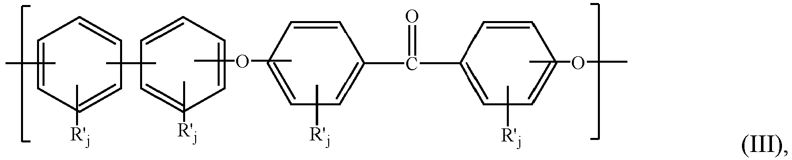 where :
   each R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium;
   each i, equal to or different from each other, is an integer ranging from 0 to 4; and
   each j, equal to or different from each other, is an integer ranging from 0 to 4.

In some embodiments, recurring units (R_{PEEK}) are selected from units of formula (IIa) : 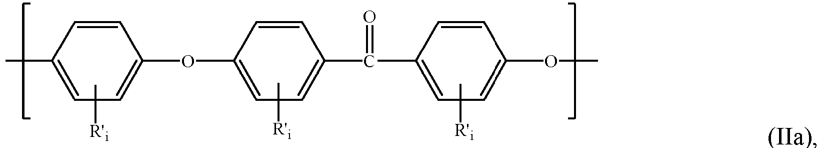
and recurring units (R_{PEDEK}) are selected from units of formula (IIIa) : 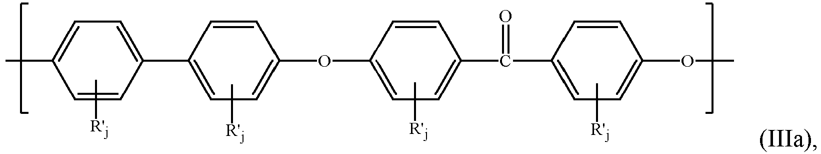
where R', i and j are as described above.

Preferably each i is zero, preferably each j is zero, and most preferably, each of i and j are zero such that the PEEK-PEDEK copolymer comprises :
- recurring units (R_{PEEK}) of formula (IIb) : 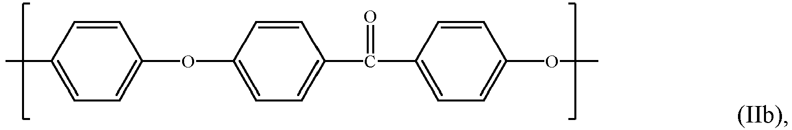 and
- recurring units (R_{PEDEK}) of formula (IIIb) :

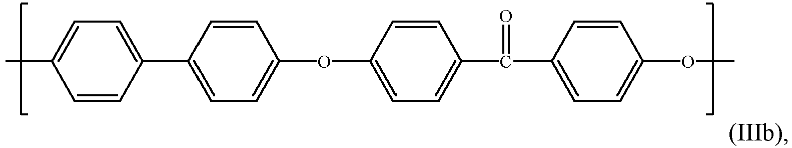

Recurring units (R_{PEEK}) and (R_{PEDEK}) collectively represent at least 50 mol %, preferably at least 60 mol %, 70 mol %, 80 mol %, 90 mol %, 95 mol %, and most preferably at least 99 mol % of recurring units in the PEEK-PEDEK copolymer.

Recurring units (R_{PEEK}) and (R_{PEDEK}) are present in the PEEK-PEDEK copolymer in a molar ratio (R_{PEEK})/(R_{PEDEK}) ranging from 90/10 to 65/35, preferably from 80/20 to 70/30.

The weight-average molecular weight, Mw, of the PEEK-PEDEK copolymer preferably ranges from 50,000 to 110,000 Daltons, more preferably from 60,000 to 100,000 Daltons and most preferably from 70,000 to 90,000 Daltons as measured by gel permeation chromatography (GPC) using polystyrene calibration standards. Preferably, the PEEK-PEDEK copolymer exhibits a melt viscosity of at least 30 Pa-s, preferably at least 50 Pa-s, more preferably at least 80 Pa-s, as measured according to ASTM D3835 at 400°C and 1000 s-1 using a tungsten carbide die of 0.5 x 3.175 mm.

Preferably, the (PAEK-1) exhibits a melt viscosity of at most 550 Pa measured according to ASTM D3835 at 400°C and 1000 s-1 using a tungsten carbide die of 0.5 x 3.175 mm, more preferably of at most 450 Pa-s, and most preferably of at most 350 Pa-s.

In some embodiments, the polymer composition includes the PEEK-PEDEK copolymer in an amount ranging from about 1 to about 40 wt. %, preferably from about 25 to about 40 wt. %, based on the combined weight of the PEEK-PEDEK copolymer and the polyphenylsulfone (PPSU).

### Optional Reinforcing Fillers

The polymer composition may optionally include reinforcing fillers such as fibrous or particulate fillers. A fibrous reinforcing filler is a material having length, width and thickness, wherein the average length is significantly larger than both the width and thickness. Preferably, such a material has an aspect ratio, defined as the average ratio between the length and the smallest of the width and thickness of at least 5. Preferably, the aspect ratio of the reinforcing fibers is at least 10, more preferably at least 20, still more preferably at least 50. The particulate fillers have an aspect ratio of at most 5, preferably at most 2.

Preferably, the reinforcing filler is selected from mineral fillers, such as talc, mica, kaolin, calcium carbonate, calcium silicate, magnesium carbonate; glass fibers; carbon fibers, boron carbide fibers; wollastonite; silicon carbide fibers; boron fibers, graphene, carbon nanotubes (CNT), and the like. Most preferably, the reinforcing filler is glass fiber, preferably chopped glass fiber.

The amount of the reinforcing filler may range in the case of particulate fillers, from 1 wt. % to 40 wt. %, preferably from 5 wt. % to 35 wt. % and most preferably from 10 wt. % to 30 wt. %, and in the case of fibrous fillers from 5 wt. % to 50 wt. %, preferably from 10 wt. % to 40 wt. %, and most preferably from 15 wt. % to 30 wt. % based on the total weight of the polymer composition. In some embodiments, the polymer composition is free of a fibrous filler. Alternatively the polymer composition may be free of a particulate filler. Preferably, the polymer composition is free of reinforcing fillers.

### Optional Additives

In addition to the PPSU, the PEEK-PEDEK copolymer, and the optional reinforcing filler, the polymer composition may further include optional additives such as titanium dioxide, zinc sulfide, zinc oxide, ultraviolet light stabilizers, heat stabilizers, antioxidants such as organic phosphites and phosphonites, acid scavengers, processing aids, nucleating agents, lubricants, flame retardants, a smoke-suppressing agents, anti-static agents, anti-blocking agents, and conductivity additives such as carbon black.

When one or more optional additives are present, their total concentration is preferably less than 10 wt. %, less than 5 wt. % and most preferably less than 2 wt. %, based on the total weight of polymer composition.

### Method of Making the Polymer Composition

Exemplary embodiments include a method of making the polymer composition described herein by melt mixing the PPSU and the PEEK-PEDEK copolymer, the optional reinforcing filler, and the optional additives.

The polymer composition can be prepared by any known melt-mixing process that is suitable for preparing thermoplastic molding compositions. Such a process may be carried out by heating the polymers above their melting temperatures to form a melt mixture of the polymers. In the some aspects, the components for forming the polymer composition are fed, simultaneously or separately, to the melt-mixing apparatus and melt-mixed in the apparatus. Suitable melt-mixing apparatuses are, for example, kneaders, Banbury mixers, single-screw extruders, and twin-screw extruders.

### Shaped Articles Including the Polymer Composition

Exemplary embodiments also include shaped articles comprising the above-described polymer composition.

The shaped articles may be made from the polymer composition using any suitable melt-processing method such as injection molding, extrusion molding, roto-molding, or blow-molding.

As discussed above, the polymer composition may be well suited for the manufacture of articles useful in a wide variety of applications. For example, the high-flow, toughness, and chemical resistance properties of the polymer composition makes it especially suitable for use in mobile electronic devices, additive manufacturing such as 3D printing, aircraft interiors, food service dishware and steam trays, fibers for woven or non-woven fabrics, and electrical wire coatings.

In some embodiments, the shaped article is a structural component, for example, a housing or frame component, of a mobile electronic device. Mobile electronic devices are devices that are transported and used in various locations while exchanging/providing access to data, e.g. through a wireless or mobile network connection. Representative examples of mobile electronic devices include mobile phones, personal digital assistants, laptop computers, tablet computers, radios, cameras and camera accessories, watches, calculators, music players, global positioning system receivers, portable games, hard drives and other electronic storage devices, and the like.

Exemplary embodiments will now be described in the following nonlimiting examples.

### EXAMPLES

### Materials

The following PPSU was used in the examples :
Radel^{®} PPSU R-5100 NT, available from Solvay Specialty Polymers USA, LLC. This is a medium viscosity grade of PPSU having a melt flow rate (MFR) ranging from 14 to 20 g/10 min as measured using a melt index apparatus according to ASTM D1238 at 365°C using a 5.0 kg weight. The specific lot used in the examples had an MFR of 17.0 g/10 min.

The copolymers used in the examples were PEEK copolymers where the stoichiometric amount of hydroquinone was partially substituted with biphenol (4,4'-dihydroxydiphenyl). These copolymers are also known as "PEEK-PEDEK copolymers" where "PEDEK" represents the polymer repeating unit from the polycondensation of biphenol with 4,4'-difluorobenzophenone.

The PEEK-PEDEK copolymers used in the examples were :
80/20 PEEK-PEDEK copolymer (80 mol % PEEK, 20 mol % PEDEK), MV = 203 Pa-s at 400 C and 1000 s⁻¹.
75/25 PEEK-PEDEK copolymer (75 mol % PEEK, 25 mol % PEDEK), MV = 150 Pa-s at 400 C and 1000 s⁻¹.
70/30 PEEK-PEDEK copolymer (70 mol % PEEK, 30 mol % PEDEK), MV = 194 Pa-s at 400 C and 1000 s⁻¹.

### Preparation of Formulations

The compositions of the Examples and Comparative Examples are shown below in Table 1. All polymer blends were prepared by first tumble blending pellets of the resins to be blended in their respective amounts for about 20 minutes, followed by melt compounding.

### Testing of the Formulations

Mechanical properties were tested for all the formulations using injection molded ASTM test specimens which consisted of 1) Type I tensile bars, 2) 5 in x 0.5 in x 0.125 in flexural bars, and 3) 4 in x 4 in x 0.125 in plaques for the instrumented impact (Dynatup) testing. The following ASTM test methods were employed in evaluating all compositions :
D638 : Tensile properties
D790 : Flexural properties
D256 : Izod impact resistance (notched)
D3763 : Instrumented impact resistance (Dynatup impact)

Melt rheology and melt processability were evaluated in two ways : 1) melt flow rate measurement by ASTM D1238 at 365°C with a 5 kg weight; 2) capillary rheometry using a Dynisco^{®} LCR7000 capillary rheometer. The capillary rheometry was run using a temperature of 380°C over a shear rate range from 25 to 3500 s⁻¹ according to ASTM D3835 using a die having an orifice length of 15.240 ± 0.025 mm and an orifice diameter of 1.016 ± 0.008 mm.

Chemical resistance against sunscreen cream was tested by applying Banana Boat^{®} SPF30 broad spectrum sunscreen cream to ASTM D-246C (5 in. x 0.5 in. x 0.125 in.) flexural bars that were mounted onto a Bergen parabolic variable strain flexural jig, which varied the applied strain on the plastic material from about zero to about 2.0 %, to form stressed assemblies. As used herein, x % applied strain is the strain required to elongate the molded sample of the polymer composition by x %. For example, if the length of the molded sample was 1 in., 2 % applied strain refers to the strain required to elongate the molded sample to 1.02 in. in the direction of the applied strain. The stressed assemblies were aged in a controlled humidity environmental chamber at a temperature of about 65°C and relative humidity of about 90 % for 72 hours. Subsequently, the assemblies were removed from the chamber and the ASTM flexural bars mounted on the strain jigs were inspected for any signs of cracking or crazing. Critical strain to failure was recorded as the lowest strain level on the parabolic fixture on which cracking or crazing was observed.

The effects of PEEK-PEDEK copolymer addition on the mechanical, chemical resistance, and flow properties of PPSU are shown below in Table 1.

**Table 1**

| Mechanical and Flow Properties of the Examples and Comparative Examples | | | | | | | | | | |
|---|---|---|---|---|---|---|---|---|---|---|
| **Examples** | **C1** | **E1** | **E2** | **E3** | **E4** | **E5** | **E6** | **C2** | **C3** | **C4** |
| Radel R-5100 NT | 100 | 75 | 75 | 75 | 60 | 60 | 60 | 0 | 0 | 0 |
| 80/20 PEEK-PEDEK Copolymer | 0 | 25 | | | 40 | | | 100 | | |
| 75/25 PEEK-PEDEK Copolymer | | | 25 | | | 40 | | | 100 | |
| 70/30 PEEK-PEDEK Copolymer | | | | 25 | | | 40 | | | 100 |

| **Tests** | | | | | | | | | | |
|---|---|---|---|---|---|---|---|---|---|---|
| Tensile Yield Strength (psi) [2"/min] | 11200 | 11200 | 11200 | 11200 | 11000 | 11000 | 11000 | 10500 | 10500 | 10900 |
| Tensile Modulus (Ksi) | 345 | 353 | 361 | 359 | 361 | 360 | 366 | 395 | 399 | 394 |
| Tensile Yield Elongation (%) | 7.5 | 7.1 | 7.1 | 7.1 | 6.8 | 6.8 | 6.7 | 5.6 | 5.5 | 5.6 |
| Tensile Elongation at Break (%) | 65 | 53 | 53 | 56 | 54 | 65 | 64 | 120 | 140 | 120 |
| Flexural Strength (psi) | 14800 | 15100 | 15100 | 15200 | 15100 | 15100 | 15000 | 15500 | 15700 | 15500 |
| Flexural Modulus (Ksi) | 366 | 376 | 376 | 377 | 377 | 377 | 373 | 407 | 407 | 403 |
| Notched Izod (ft-lb/in) | 11.5 | 16.1 | 14.8 | 14.7 | 17.6 | 17.4 | 17 | 28 | 26.1 | 25.0 |
| Dynatup Impact - Total Energy (ft-lb) | 47.9 | 46 | 41.1 | 50 | 48.2 | 45.3 | 52.5 | 60.8 | 60.9 | 62.8 |
| Sunscreen ESCR Critical Strain (%) | > 2.0 N.E. | > 2.0 N.E. | > 2.0 N.E. | > 2.0 N.E. | > 2.0 N.E. | > 2.0 N.E. | > 2.0 N.E. | 1.22 | 1.17 | 1.26 |
| Melt Flow Rate (MFR) at 365°C, 5 kg (g/10 min) | 17.0 | 29.2 | 29.1 | 27.7 | 33.5 | 40.7 | 31.0 | 58.6 | 86.2 | 54.8 |
| Melt Viscosity at 380°C, 25 s⁻¹ (Pa-s) | 957 | 715 | 651 | 728 | 642 | 547 | 664 | 444 | 285 | 466 |
| Melt Viscosity at 380°C, 500 s⁻¹(Pa-s) | 635 | 478 | 494 | 491 | 423 | 369 | 441 | 281 | 212 | 305 |
| Melt Viscosity at 380°C, 3500 s⁻¹ (Pa-s) | 264 | 219 | 213 | 220 | 204 | 194 | 209 | 155 | 134 | 167 |

| | | | | | | | | | | |
|---|---|---|---|---|---|---|---|---|---|---|
| N.E. : No effect observed up to the maximum applied strain of 2.0 % | | | | | | | | | | |

As shown by the data in Table 1, there was a significant improvement in melt flow and melt viscosity with the addition of even a minor amount of PEEK-PEDEK copolymer. Additionally, the flow enhancement was not achieved at the expense of a reduction in toughness as is usually the case in the well-known polymer trade-off between mechanical toughness and melt flow characteristics.

The melt flow of the PPSU compositions modified with PEEK-PEDEK (Examples E1-E6) exhibited substantially enhanced flow and reduced melt viscosity relative to unmodified PPSU (Example C1). Indeed, the MFR was increased at least 63 % (Example E3) and as much as 139 % (Example E5) relative to the MFR of the PPSU (Example C1). The melt viscosity at low shear rate was reduced by approximately 40 % in the best case (Example E5) relative to the melt viscosity of the PPSU (Example C1).

Surprisingly, the addition of PEEK-PEDEK copolymer did not compromise any of the mechanical properties of the PPSU. Most notably, the toughness and impact resistance properties actually improved with the addition of the PEEK-PEDEK copolymer. The notched Izod impact of the example compositions was about 25 % to about 50 % higher than the notched Izod impact resistance of the neat PPSU of Comparative Example C1.

Finally, the environmental stress cracking resistance (ESCR) testing of the compositions of Examples E1 to E6 showed no effect up to the maximum applied strain of 2.0 %, which was the same result observed for the neat PPSU of Comparative Example 1. Unexpectedly, there was no downgrade observed in this important performance attribute of PPSU as a result of the flow enhancement, despite the addition of as much as 40 wt. % of the PEEK-PEDEK copolymer with its relatively weak ESCR performance (Comparative Examples C2 to C4).

## Claims

1. A polymer composition comprising :
(i) a polyphenylsulfone (PPSU) including at least 50 mol % of recurring units of formula (I) : 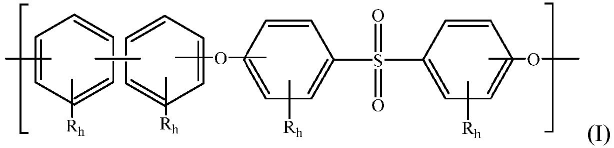 wherein :
each R, equal to or different from each other, is selected from the group consisting of a halogen, an alkyl, an alkenyl, an alkynyl, an aryl, an ether, a thioether, a carboxylic acid, an ester, an amide, an imide, an alkali or alkaline earth metal sulfonate, an alkyl sulfonate, an alkali or alkaline earth metal phosphonate, an alkyl phosphonate, an amine, and a quaternary ammonium, and
each h, equal to or different from each other, is an integer ranging from 0 to 4; and
(ii) from 1 to 40 wt. %, preferably from 25 to 40 wt. %, of a PEEK-PEDEK copolymer comprising :
- recurring units (R_{PEEK}) of formula (II) : 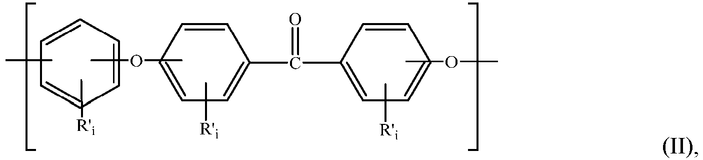 and
- recurring units (R_{PEDEK}) of formula (III) : 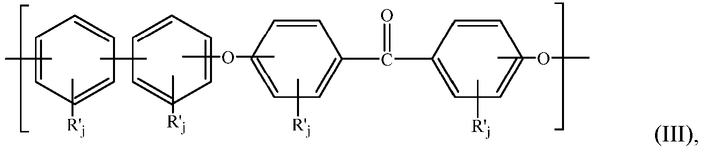 wherein :
each R', equal to or different from each other, is selected from the group consisting of halogen, alkyl, alkenyl, alkynyl, aryl, ether, thioether, carboxylic acid, ester, amide, imide, alkali or alkaline earth metal sulfonate, alkyl sulfonate, alkali or alkaline earth metal phosphonate, alkyl phosphonate, amine and quaternary ammonium,
each i, equal to or different from each other, is an integer ranging from 0 to 4,
each j, equal to or different from each other, is an integer ranging from 0 to 4;
the total concentration of recurring units (R_{PEEK}) and (R_{PEDEK}) is at least 50 mol %, relative to the total number of moles of recurring units in the PEEK-PEDEK copolymer; and
the weight percent of the PEEK-PEDEK copolymer is relative to the combined weight of the PEEK-PEDEK copolymer and the polyphenylsulfone (PPSU).

2. The polymer composition of claim 1, wherein the polyphenylsulfone (PPSU) includes at least 50 mol % of recurring units of formula (I) :

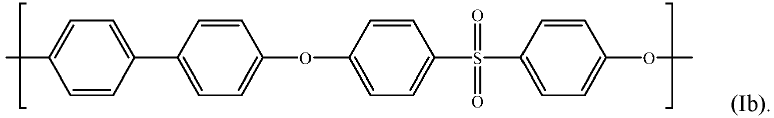

3. The polymer composition of any one of claims 1 and 2, wherein the PEEK-PEDEK copolymer comprises :
- recurring units (R_{PEEK}) of formula (IIb) : 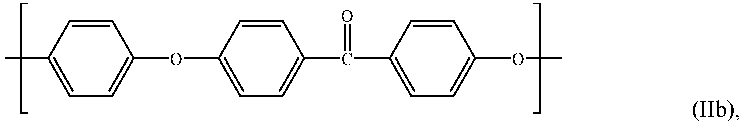 and
- recurring units (R_{PEDEK}) of formula (IIIb) :

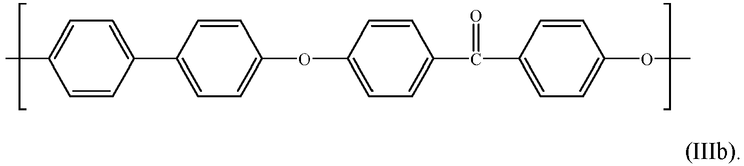

4. The polymer composition of any one of claims 1 to 3, wherein the polymer composition includes the polyphenylsulfone (PPSU) in an amount ranging from 99 to 60 wt. %, preferably from 75 to 60 wt. %, based on the combined weight of the PEEK-PEDEK copolymer and the polyphenylsulfone (PPSU).

5. The polymer composition of any one of claims 1 to 4, wherein the molar ratio of recurring units (R_{PEEK})/(R_{PEDEK}) ranges from 90/10 to 65/35, preferably from 80/20 to 70/30.

6. The polymer composition of any one of claims 1 to 5, wherein the polymer composition has a melt flow rate 30 %, preferably 60 % greater than the melt flow rate of the polyphenylsulfone (PPSU) alone, wherein the melt flow rate is measured at 365°C with a 5.0 kg weight according to ASTM D1238.

7. The polymer composition of any one of claims 1 to 6, wherein the polymer composition has a notched Izod impact resistance ranging from 588 J/m to 1123 J/m (from 11 to 21 ft-lb/in), preferably from 642 J/m to 1070 J/m (from 12 to 20 ft-lb/in), as measured according to ASTM D256.

8. The polymer composition of any one of claims 1 to 7, wherein the polymer composition has an environmental stress cracking resistance critical strain to sunscreen of greater than 2.0 %,
wherein the environmental stress cracking resistance is measured as the critical strain of an ASTM D-246C 5 in. x 0.5 in. x 0.125 in. flexural bar molded from the polymer composition after coating the flexural bar with sunscreen cream and applying a relative strain of 2 % to the coated flexural bar for 72 hours at 65°C and a relative humidity of 90 %, and
wherein the sunscreen comprises at least 1.8 wt. % avobenzone, at least 7 wt. % homosalate and at least 5 wt. % octocrylene.

9. The polymer composition of any one of claims 1 to 8, further comprising a reinforcing filler.

10. The polymer composition of claim 9, wherein the reinforcing filler is a fibrous filler, preferably glass fiber, and the polymer composition includes the fibrous filler in an amount ranging from 1 to 40 wt. %, preferably from 5 to 35 wt. %, based on the total weight of the polymer composition.

11. A method of making the polymer composition of any one of claims 1 to 10, comprising melt mixing the polyphenylsulfone (PPSU) and the PEEK-PEDEK copolymer.

12. A shaped article comprising the polymer composition of any one of claims 1 to 10.

13. The shaped article of claim 12, wherein the shaped article is a component of a mobile electronic device, a wire coating, or an article made by additive manufacturing.

## Patentansprüche

1. Polymerzusammensetzung, umfassend:
(i) ein Polyphenylsulfon (PPSU) mit mindestens 50 Mol-% Wiederholungseinheiten der Formel (I): 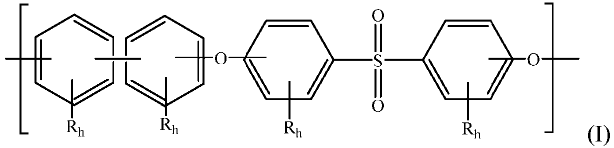 wobei:
R jeweils gleich oder voneinander verschieden aus der Gruppe bestehend aus einem Halogen, einem Alkyl, einem Alkenyl, einem Alkinyl, einem Aryl, einem Ether, einem Thioether, einer Carbonsäure, einem Ester, einem Amid, einem Imid, einem Alkali- oder Erdalkalimetallsulfonat, einem Alkylsulfonat, einem Alkali- oder Erdalkalimetallphosphonat, einem Alkylphosphonat, einem Amin und einem quartären Ammonium ausgewählt ist und
h jeweils gleich oder voneinander verschieden eine ganze Zahl im Bereich von 0 bis 4 ist; und
(ii) 1 bis 40 Gew. %, vorzugsweise 25 bis 40 Gew.-%, eines PEEK-PEDEK-Copolymers, umfassend:
- Wiederholungseinheiten (R_{PEEK}) der Formel (II): 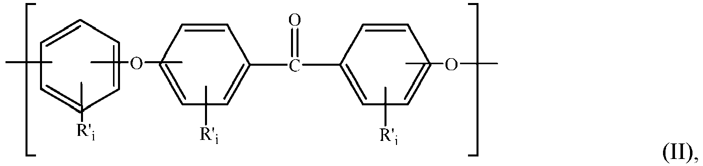 und
- Wiederholungseinheiten (R_{PEDEK}) der Formel (III): 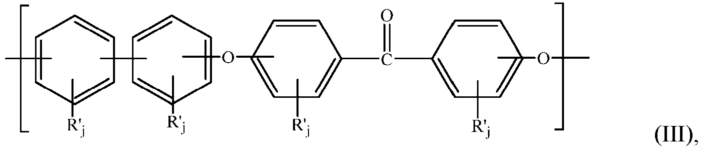 wobei:
R' jeweils gleich oder voneinander verschieden aus der Gruppe bestehend aus Halogen, Alkyl, Alkenyl, Alkinyl, Aryl, Ether, Thioether, Carbonsäure, Ester, Amid, Imid, Alkali- oder Erdalkalimetallsulfonat, Alkylsulfonat, Alkali- oder Erdalkalimetallphosphonat, Alkylphosphonat, Amin und quartärem Ammonium ausgewählt ist;
i jeweils gleich oder voneinander verschieden eine ganze Zahl im Bereich von 0 bis 4 ist,
j jeweils gleich oder voneinander verschieden eine ganze Zahl im Bereich von 0 bis 4 ist;
die Gesamtkonzentration von Wiederholungseinheiten (R_{PEEK}) und (R_{PEDEK}) mindestens 50 Mol-%, bezogen auf die Gesamtzahl von Molen von Wiederholungseinheiten in dem PEEK-PEDEK-Copolymer, beträgt; und
sich der Gewichtprozentanteil des PEEK-PEDEK-Copolymers auf das kombinierte Gewicht des PEEK-PEDEK-Copolymers und des Polyphenylsulfons (PPSU) bezieht.

2. Polymerzusammensetzung nach Anspruch 1, wobei das Polyphenylsulfon (PPSU) mindestens 50 Mol-% Wiederholungseinheiten der Formel (I) umfasst:

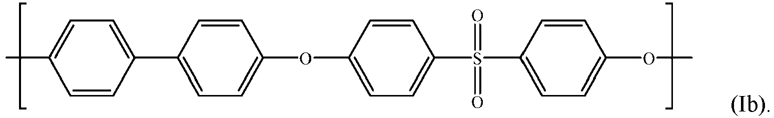

3. Polymerzusammensetzung nach einem der Ansprüche 1 und 2, wobei das PEEK-PEDEK-Copolymer Folgendes umfasst:
- Wiederholungseinheiten Einheiten (R_{PEEK}) der Formel (IIb) : 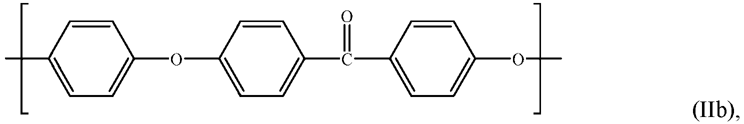 und
- Wiederholungseinheiten Einheiten (R_{PEDEK}) der Formel (IIIb) :

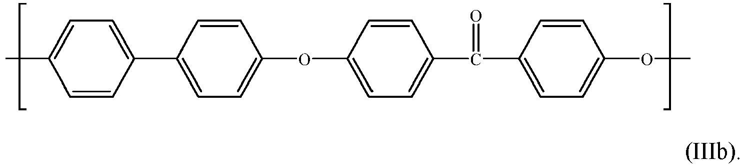

4. Polymerzusammensetzung nach einem der Ansprüche 1 bis 3, wobei die Polymerzusammensetzung das Polyphenylsulfon (PPSU) in einer Menge im Bereich von 99 bis 60 Gew.-%, vorzugsweise von 75 bis 60 Gew.-%, bezogen auf das kombinierte Gewicht des PEEK-PEDEK-Copolymers und des Polyphenylsulfons (PPSU), enthält.

5. Polymerzusammensetzung nach einem der Ansprüche 1 bis 4, wobei das Molverhältnis von Wiederholungseinheiten (R_{PEEK}) / (R_{PEDEK}) im Bereich von 90/10 bis 65/35, vorzugsweise von 80/20 bis 70/30, liegt.

6. Polymerzusammensetzung nach einem der Ansprüche 1 bis 5, wobei die Schmelzflussrate der Polymerzusammensetzung 30 %, vorzugsweise 60 %, größer ist als die Schmelzflussrate des Polyphenylsulfons (PPSU) alleine, wobei die Schmelzflussrate bei 365 °C mit einem Gewicht von 5,0 kg gemäß ASTM D1238 gemessen wird.

7. Polymerzusammensetzung nach einem der Ansprüche 1 bis 6, wobei die Polymerzusammensetzung eine Izod-Kerbschlagzähigkeit im Bereich von 588 J/m bis 1123 J/m (von 11 bis 21 ft-lb/in), vorzugsweise von 642 J/m bis 1070 J/m (von 12 bis 20 ft-lb/in), wie gemäß ASTM D256 gemessen, aufweist.

8. Polymerzusammensetzung nach einem der Ansprüche 1 bis 7, wobei die Polymerzusammensetzung eine kritische Spannung der Spannungsrissbeständigkeit für Sonnenschutzmittel von mehr als 2,0 % aufweist,
wobei die Spannungsrissbeständigkeit als die kritische Spannung eines aus der Polymerzusammensetzung hergestellten Biegestabs gemäß ASTM D-246C mit den Abmessungen 5 Zoll x 0,5 Zoll x 0,125 Zoll nach Beschichten des Biegestabs mit Sonnenschutzcreme und Ausüben einer relativen Spannung von 2 % auf den beschichteten Biegestab über einen Zeitraum von 72 Stunden bei 65 °C und einer relativen Feuchte von 90 % gemessen wird und
wobei das Sonnenschutzmittel mindestens 1,8 Gew.-% Avobenzon, mindestens 7 Gew.-% Homosalat und mindestens 5 Gew.-% Octocrylen umfasst.

9. Polymerzusammensetzung nach einem der Ansprüche 1 bis 8, ferner umfassend einen verstärkenden Füllstoff.

10. Polymerzusammensetzung nach Anspruch 9, wobei es sich bei dem verstärkenden Füllstoff um einen faserförmigen Füllstoff, vorzugsweise Glasfaser, handelt und die Polymerzusammensetzung den faserförmigen Füllstoff in einer Menge im Bereich von 1 Gew.-% bis 40 Gew.-%, vorzugsweise von 5 Gew.-% bis 35 Gew.-%, bezogen auf das Gesamtgewicht der Polymerzusammensetzung, enthält.

11. Verfahren zur Herstellung der Polymerzusammensetzung nach einem der Ansprüche 1 bis 10, umfassend das Schmelzemischen des Polyphenylsulfons (PPSU) und des PEEK-PEDEK-Copolymers.

12. Formkörper, umfassend die Polymerzusammensetzung nach einem der Ansprüche 1 bis 10.

13. Formkörper nach Anspruch 12, wobei es sich bei dem Formkörper um ein Bauteil einer mobilen elektronischen Vorrichtung, eine Drahtbeschichtung oder einen durch additive Fertigung hergestellten Gegenstand handelt.

## Revendications

1. Composition de polymère comprenant :
(i) une polyphénylsulfone (PPSU) comportant au moins 50 % en moles de motifs répétitifs de formule (I) : 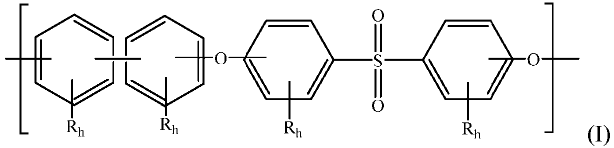 dans laquelle :
chaque R, égal ou différent les uns des autres, est choisi dans le groupe constitué d'un halogène, d'un alkyle, d'un alcényle, d'un alcynyle, d'un aryle, d'un éther, d'un thioéther, d'un acide carboxylique, d'un ester, d'un amide, d'un imide, d'un sulfonate de métal alcalin ou alcalino-terreux, d'un sulfonate d'alkyle, d'un phosphonate de métal alcalin ou alcalino-terreux, d'un phosphonate d'alkyle, d'une amine, et d'un ammonium quaternaire, et
chaque h, égal ou différent les uns des autres, est un entier allant de 0 à 4 ; et
(ii) de 1 à 40 % en poids, de préférence de 25 à 40 % en poids, d'un copolymère PEEK-PEDEK comprenant :
- des motifs répétitifs (R_{PEEK}) de formule (II) : 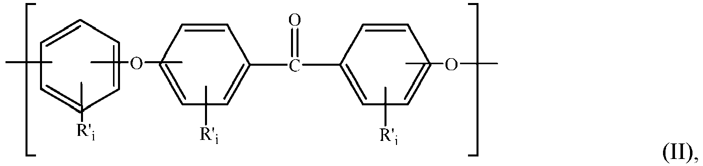 et
- des motifs répétitifs (R_{PEDEK}) de formule (III) : 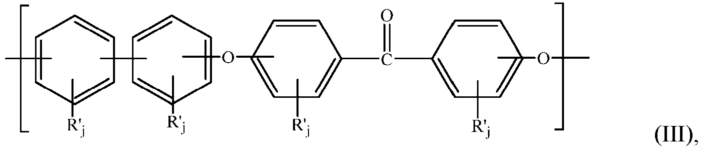 dans laquelle :
chaque R', égal ou différent les uns des autres, est choisi dans le groupe constitué d'halogène, d'alkyle, d'alcényle, d'alcynyle, d'aryle, d'éther, de thioéther, d'acide carboxylique, d'ester, d'amide, d'imide, de sulfonate de métal alcalin ou alcalino-terreux, de sulfonate d'alkyle, de phosphonate de métal alcalin ou alcalino-terreux, de phosphonate d'alkyle, d'amine et d'ammonium quaternaire,
chaque i, égal ou différent les uns des autres, est un entier allant de 0 à 4,
chaque j, égal ou différent les uns des autres, est un entier allant de 0 à 4 ;
la concentration totale de motifs répétitifs (R_{PEEK}) et (R_{PEDEK}) est d'au moins 50 % en moles, par rapport au nombre total de moles de motifs répétitifs dans le copolymère PEEK-PEDEK ; et
le pourcentage en poids du copolymère PEEK-PEDEK est par rapport au poids combiné du copolymère PEEK-PEDEK et de la polyphénylsulfone (PPSU).

2. Composition de polymère selon la revendication 1, dans laquelle la polyphénylsulfone (PPSU) comporte au moins 50 % en moles de motifs répétitifs de formule (I) :

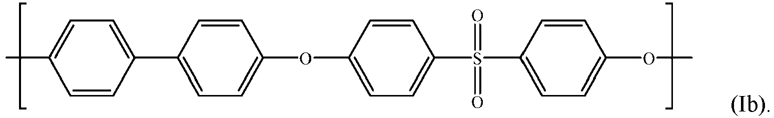

3. Composition de polymère selon l'une quelconque des revendications 1 et 2, dans laquelle le copolymère PEEK-PEDEK comprend :
- des motifs répétitifs (R_{PEEK}) de formule (IIb) : 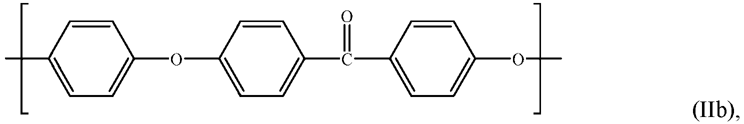 et
- des motifs répétitifs (R_{PEDEK}) de formule (IIIb) :

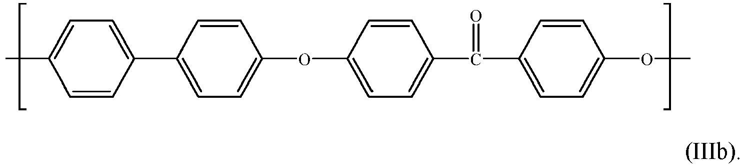

4. Composition de polymère selon l'une quelconque des revendications 1 à 3, dans laquelle la composition de polymère comporte la polyphénylsulfone (PPSU) en une quantité allant de 99 à 60 % en poids, de préférence de 75 à 60 % en poids, par rapport au poids combiné du copolymère PEEK-PEDEK et de la polyphénylsulfone (PPSU).

5. Composition de polymère selon l'une quelconque des revendications 1 à 4, dans laquelle le rapport molaire de motifs répétitifs (R_{PEEK}) / (R_{PEDEK}) est dans la plage de 90/10 à 65/35, de préférence de 80/20 à 70/30.

6. Composition de polymère selon l'une quelconque des revendications 1 à 5, dans laquelle la composition de polymère a un indice de fluidité à chaud 30 %, de préférence 60 % plus élevé que l'indice de fluidité à chaud de la polyphénylsulfone (PPSU) seule, dans laquelle l'indice de fluidité à chaud est mesuré à 365 °C avec un poids de 5,0 kg selon la norme ASTM D1238.

7. Composition de polymère selon l'une quelconque des revendications 1 à 6, dans laquelle la composition de polymère a une résistance aux chocs Izod entaillée dans la plage de 588 J/m à 1 123 J/m (de 11 à 21 ft-lb/po), de préférence de 642 J/m à 1 070 J/m (de 12 à 20 ft-lb/po), telle que mesurée selon la norme ASTM D256.

8. Composition de polymère selon l'une quelconque des revendications 1 à 7, dans laquelle la composition de polymère a une déformation critique de résistance à la fissuration sous contrainte environnementale par rapport à un écran solaire supérieure à 2,0 %,
dans laquelle la résistance à la fissuration sous contrainte environnementale est mesurée comme la déformation critique d'une barre de flexion de 5 po. x 0,5 po x 0,125 po selon la norme ASTM D-246C moulée à partir de la composition de polymère après revêtement de la barre de flexion par une crème écran solaire et application d'une déformation relative de 2 % à la barre de flexion revêtue pendant 72 heures à 65 °C et une humidité relative de 90 %, et
dans laquelle l'écran solaire comprend au moins 1,8 % en poids d'avobenzone, au moins 7 % en poids d'homosalate et au moins 5 % en poids d'octocrylène.

9. Composition de polymère selon l'une quelconque des revendications 1 à 8, comprenant en outre une charge de renforcement.

10. Composition de polymère selon la revendication 9, dans laquelle la charge de renforcement est une charge fibreuse, de préférence une fibre de verre, et la composition de polymère comporte la charge fibreuse en une quantité allant de 1 à 40 % en poids, de préférence de 5 à 35 % en poids, par rapport au poids total de la composition de polymère.

11. Procédé de préparation de la composition de polymère selon l'une quelconque des revendications 1 à 10, comprenant le mélange à l'état fondu de la polyphénylsulfone (PPSU) et du copolymère PEEK-PEDEK.

12. Article façonné comprenant la composition de polymère selon l'une quelconque des revendications 1 à 10.

13. Article façonné selon la revendication 12, dans lequel l'article façonné est un composant d'un dispositif électronique mobile, un revêtement de fil ou un article fabriqué par fabrication additive.
